Europäisches Patentamt

European Patent Office

Office européen des brevets

(19)

(11) Veröffentlichungsnummer: **0 272 480**
**B1**

(12) **EUROPÄISCHE PATENTSCHRIFT**

(45) Veröffentlichungstag der Patentschrift:
28.03.90

(51) Int. Cl.⁴: **B60S 1/48**

(21) Anmeldenummer: **87117349.8**

(22) Anmeldetag: **25.11.87**

(54) Scheibenreinigungsanlage.

(30) Priorität: **19.12.86 DE 3643476**

(43) Veröffentlichungstag der Anmeldung:
**29.06.88 Patentblatt 88/26**

(45) Bekanntmachung des Hinweises auf die Patenterteilung:
**28.03.90 Patentblatt 90/13**

(84) Benannte Vertragsstaaten:
**ES FR GB IT**

(56) Entgegenhaltungen:
**DE-U- 1 961 897**
**DE-U- 7 524 685**
**GB-A- 768 881**
**US-A- 3 670 354**

(73) Patentinhaber: **SWF Auto-Electric GmbH, Stuttgarter Strasse 119 Postfach 135,**
**D-7120 Bietigheim-Bissingen(DE)**

(72) Erfinder: **Neubauer, Walter, Eberhardstrasse 13,**
**D-7128 Lauffen(DE)**
Erfinder: **Schmid, Eckhardt, Heilbronner Strasse 62,**
**D-7129 Brackenheim(DE)**

## Beschreibung

Die Erfindung bezieht sich auf eine Scheibenreinigungsanlage gemäß den Merkmalen des Oberbegriffs des Anspruchs 1.

Es sind bereits Scheibenreinigungsanlagen bekannt, bei denen zwecks Verbesserung der Wirkung der Waschanlage die Waschflüsstgkeit zu Düsen gefördert wird, die am Wischhebel angeordnet sind und mit diesem pendeln. Bei einer bekannten Ausführung dieser Art wird die Waschflüssigkeit durch ein Rohrstück zur Düse gefördert, das in einer durchgehenden axialen Bohrung der Wischerwelle angeordnet ist. Die Düsen sind bei dieser bekannten Ausführung seitlich an einer üblichen, die Befestigungsstelle zwischen Wischarm und Wischerwelle überdeckenden Abdeckkappe angeordnet. Dabei wird Waschflüssigkeit immer gleichzeitig durch beide Düsen abgestrahlt, was zu einem unnötigen Wasserverbrauch führt, weil das in Bewegungsrichtung hinter das Wischblatt gespritzte Waschwasser zur Reinigung der Scheibe keinen entscheidenden Beitrag leistet.

In dem DE-U 1 961 897 ist eine Scheibenreinigungsanlage schematisch dargestellt und beschrieben, bei der im Wischarm zwei Teilleitungen angeordnet sind, die jede an einen besonderen Behälter anschließbar sind. Dabei soll zu den Düsen neben der üblichen Waschflüssigkeit auch Warmluft oder ein Enteisungsmittel zugeführt werden. Es sollen also bei dieser bekannten Scheibenreinigungsanlage unterschiedliche Medien wahlweise den gleichen Düsen zugeführt werden, wobei aus dieser Druckschrift nicht genau erkennbar ist, wie diese Medien konkret von den Behältern zu den Teilleitungen im Wischarm gelangen.

Es ist außerdem bekannt, daß man zwischen dem Rohrstück in der Welle und den beiden zu den Düsen führenden Kanälen ein Steuerglied anordnen kann, das bewegungsabhängig derart gesteuert wird, daß nur jeweils die dem Wischblatt vorlaufende Düse mit Flüssigkeit beaufschlagt wird. Die Unterbringung eines solchen Steuergliedes im Befestigungsteil eines Wischarms oder – allgemeiner ausgedrückt – im Bereich hinter dem abtriebsseitigen Ende der Wischerwelle ist aber aus Platzgründen nicht immer möglich. Außerdem erfüllt die bewegungsabhängige Steuerung des Steuergliedes nicht immer alle Anforderungen und man möchte bei manchen Anwendungsfällen eine genauere Steuerung etwa mittels eines Magnetventils einsetzen.

Der vorliegenden Erfindung liegt daher die Aufgabe zugrunde, eine Scheibenreinigungsanlage dieser Art mit einer durchgehenden axialen Bohrung für eine Waschflüssigkeitsleitung derart weiterzubilden, daß mit einfachen Mitteln funktionssicher eine Verteilung der Waschflüssigkeit auf einzelne Düsen möglich ist.

Diese Aufgabe wird erfindungsgemäß mit den kennzeichnenden Merkmalen des Anspruchs 1 gelöst.

Die Erfindung geht dabei aus von der Überlegung, daß man unterschiedliche Steuerelemente zur Verteilung der Waschflüssigkeit ohne größere Platzprobleme dann einsetzen kann, wenn man dieses Steuerorgan vor dem antriebseitigen Ende der Welle plaziert und dazu gemäß dem Kern der vorliegenden Erfindung das durchgehende Rohrstück in der Welle in mehrere Förderkanäle aufteilt. Eine solche Ausführung hat gegenüber der bekannten Ausführung auch hinsichtlich der Funktionssicherheit Vorteile, weil bewegliche und damit nur mit erhöhtem Aufwand abdichtbare Teile dann nicht an weitgehend ungeschützter Stelle angeordnet sind, wo im Winter ein Einfrieren zu befürchten ist bzw. wo Leckverluste besonders störend empfunden werden. Dabei entstehen im Vergleich zu den bisher bekannten Lösungen mit nur einem Förderkanal keine ins Gewicht fallenden Mehrkosten, weil das Rohrstück lediglich zusätzlich einen Trennsteg aufweist.

Normalerweise sind bei einer Wischanlage zwei Düsen vorgesehen, über die die Waschflüssigkeit jeweils in Bewegungsrichtung vor den hin- und herpendelnden Wischer gespritzt werden kann. Die Flüssigkeitsleitung wird dann entsprechend in zwei Förderkanäle aufgeteilt. Sollten zu der Waschanlage mehr als zwei Düsen gehören und sollte es zweckmäßig sein, daß man diese Düsen zu unterschiedlichen Zeiten mit Waschflüssigkeit versorgt, kann man natürlich entsprechend auch die Anzahl der unabhängigen Förderkanäle der Flüssigkeitsleitung erhöhen.

Gemäß einer vorteilhaften Weiterbildung der Erfindung gehen von dem Rohrstück Leitungsabschnitte zu den Düsen aus, die vorzugsweise einstückig mit dem Rohrstück und dem Trennsteg aus Kunststoff hergestellt sind. Dadurch wird die Montage wesentlich vereinfacht und ein besonderer Vorteil dieser Ausführung ist darin zu sehen, daß zwischen dem einen Ende des Rohrstücks und den Düsen ein einstückiges Bauteil vewendet wird, so daß in diesem Bereich eine einwandfreie Abdichtung der Waschflüssigkeitsleitung gegeben ist.

Prinzipiell könnten die beiden Förderkanäle unabhängig voneinander über steuerbare Elektromagnetventile mit Waschflüssigkeit versorgt werden. Der Aufwand für die Steuerung der Waschflüssigkeitsförderung zu den einzelnen Kanälen kann aber wesentlich vereinfacht werden, wenn unmittelbar an der den Leitungsabschnitten gegenüberliegenden Seite des Rohrstückes eine steuerbare Weiche zur Verteilung der Waschflüssigkeit auf einen der beiden Kanäle angeordnet wird, die durch eine Relativbewegung zwischen dem Rohrstück und einem Anschlußstück für einen zur Waschpumpe führenden Schlauch gesteuert wird. Man kann also kostengünstig auch auf mechanischem Wege dafür sorgen, daß jeweils nur einer der beiden Förderkanäle mit Waschflüssigkeit gespeist wird, während der andere abgesperrt wird.

Die Erfindung kann im Prinzip bei allen Wischanlagen mit einer in einem Lager drehbar gelagerten Welle zum pendelnden Antrieb des Scheibenwischers eingesetzt werden. Besonders bevorzugt wird der Grundgedanke der vorliegenden Erfindung aber bei sogenannten Hubwischeranlagen realisiert werden, bei denen über die Welle ein Führungsgehäuse angetrieben wird, in dem ein den Wischhebel führender Kolben linear verschiebbar angeordnet ist, der während einer Pendelbewegung des Führungsgehäuses radial verschoben wird. Derartige Hubwischanlagen sind im Prinzip bekannt, allerdings wurden bei solchen Hubwischeranlagen bisher immer ortsfeste Düsen an der Karosserie vorgesehen. Ein nach dem Grundgedanken der vorliegenden Erfindung ausgerüstetes Rohrstück mit anschließenden Leitungsabschnitten zu den Düsen kann problemlos von der Grundplatte des Führungsgehäuses her montiert werden.

Die Erfindung und deren vorteilhafte Ausgestaltungen werden nachstehend anhand des in der Zeichnung dargestellten Ausführungsbeispieles näher erläutert. Es zeigen:

Fig. 1 einen Teilschnitt durch das Führungsgehäuse einer Wischeranlage,
Fig. 2 eine Teilansicht auf die Grundplatte in Pfeilrichtung P1,
Fig. 3 einen Schnitt entlang der Schnittlinie III-III in Fig. 1 und
Fig. 4 eine Ansicht in Pfeilrichtung P2 auf das Anschlußstück.

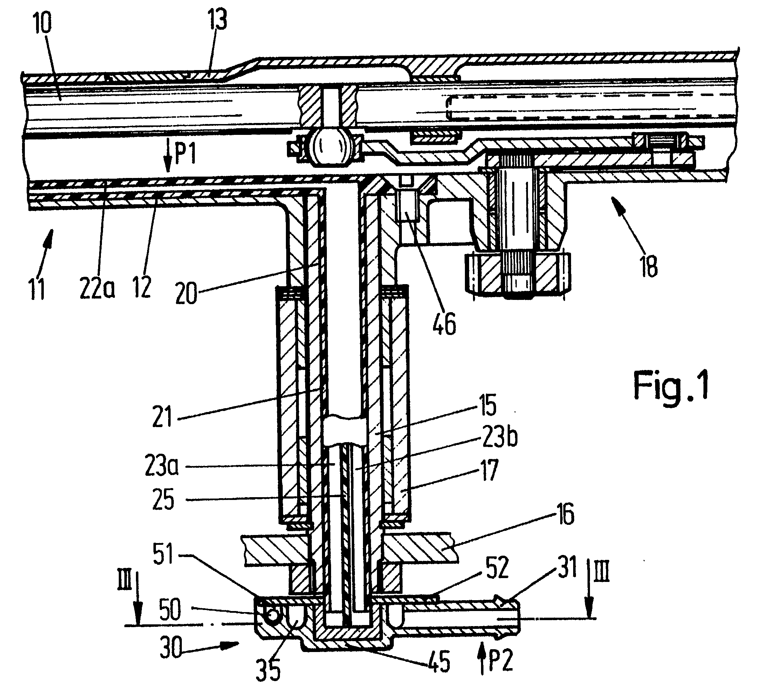

Zu der Scheibenreinigungsanlage gehört ein in den Zeichnungen nicht näher dargestellter Wischhebel, der an einem Kolben 10 befestigbar ist, der in bekannter Weise radial verschiebbar in einem Führungsgehäuse 11 geführt ist, zu dem eine Gundplatte 12 und ein Deckel 13 gehören. In der Grundplatte 12 ist drehfest eine Welle 15 fixiert, die über einen Hebel 16 und einen entsprechend ausgelegten Kreuzlenkerantrieb pendelnd antreibbar ist. Die Welle 15 ist dabei schwenkbar in einer an einem Tragrahmen fixierten Lagerbuchse 17 gelagert. Die radiale Verschiebebewegung des Kolbens 10 und damit des Wischhebels wird über ein Kurbelgetriebe 18 erzeugt, von dem nur einige Elemente in Fig. 1 dargestellt sind. Die bis jetzt beschriebenen Bauteile entsprechen einer bekannten Ausführung einer Hubwischeranlage, so daß sich hier weitere Erläuterungen erübrigen.

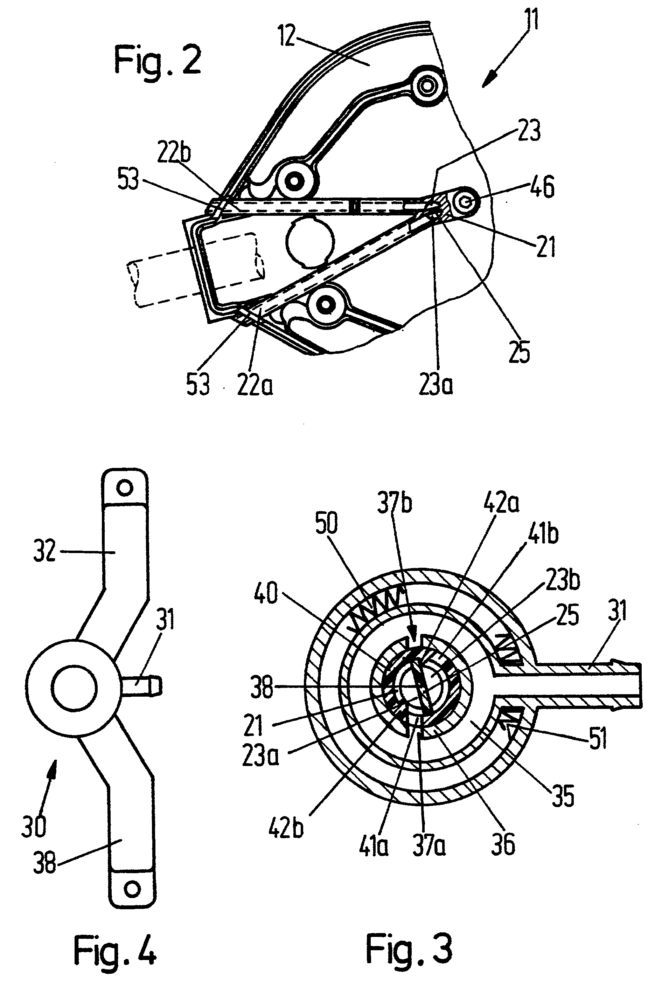

Für die vorliegende Erfindung wesentlich ist nun, daß dieser an sich bekannten Scheibenwischeranlage nun eine Scheibenwaschanlage zugeordnet ist. Aus Fig. 1 geht hervor, daß die das Führungsgehäuse 11 und damit schließlich auch die den Wischhebel antreibende Welle 15 eine durchgehende axiale Bohrung 20 aufweist, in die ein Rohrstück 21 aus Kunststoff eingesetzt ist. Von der einen Stirnseite dieses Rohrstücks 21 gehen V-förmig zwei Leitungsabschnitte 22a,b aus, die in einer Ebene unterhalb des Kolbens 10 zum Rand des Führungsgehäuses geführt sind und seitlich neben dem in Fig. 2 gestrichelt angedeuteten Kolben 10 aus dem Führungsgehäuse 11 herausragen. Diese beiden Leitungsabschnitte 22a,b sind einstückig mit dem Rohrstück 21 aus Kunststoff gefertigt. In dem aus dem Führungsgehäuse herausragenden Endbereich der Leitungsabschnitte könnten kugelige Düsenkörper verrastet werden, doch könnte die Waschflüssigkeit auch unmittelbar aus der Mündung dieser Leitungsabschnitte abgestrahlt werden, so daß diese selbst als Düse anzusehen wären.

Aus den Fig. 1 und 2 geht hervor, daß das Rohrstück durch einen axialen und diametral angeordneten Steg 25 in zwei Förderkanäle 23a,b aufgeteilt ist, die zu den entsprechenden Leitungsabschnitten 22a bzw. 22b führen. Dieser Trennsteg durchsetzt die gesamte Länge des Rohrstückes 21 und damit auch die gesamte Länge der Welle 15. Die Aufteilung der Waschflüssigkeit auf einen von zwei Förderkanälen bzw. Leitungsabschnitten bzw. Düsen erfolgt also vor der Antriebsseite der Welle 15, die bei einer solchen Hubwischeranlage nicht direkt zum Antrieb eines Wischarmes, sondern zum Antrieb eines Führungsgehäuses dient, in dem der den Wischhebel führende Kolben linear verstellbar angeordnet ist. Da dieses Rohrstück mit dem Trennsteg und den beiden Leitungsabschnitten einstückig aus Kunststoff hergestellt wird, ist eine absolute Dichtheit zwischen dem antriebsseitigen Ende der Welle und der Austrittsstelle der Waschflüssigkeit an den Mündungen der Leitungsabschnitte 22a,b gewährleistet. Dies ist wichtig, weil etwa bei steckbaren Kupplungen im Wasserleitungssystem innerhalb des Führungsgehäuses mit größeren Schäden durch Korrosion zu rechnen wäre, wenn an diesen Verbindungsstellen Waschflüssigkeit austreten würde.

Bei der erfindungsgemäßen Ausführung ist also die Bohrung 20 in der Welle 15 gewissermaßen in zwei Förderkanäle 23a,b aufgeteilt, die zusammen die Flüssigkeitsleitung zu den einzelnen Düsen bilden. Bei der in der Zeichnung dargestellten Ausführung entspricht dabei die Anzahl der Förderkanäle der Anzahl der Düsen. Damit kann jede Düse separat mit Waschflüssigkeit versorgt werden. Der Querschnitt der beiden Förderkanäle ist dabei wenigstens annähernd gleich groß, denn zu beiden Düsen soll bei einer solchen Einarm-Hubwischeranlage die gleiche Waschflüssigkeitsmenge gefördert werden. Fig. 1 zeigt, daß an das antriebsseitige Ende des Rohrstückes ein Anschlußstück 30 mit einem Stutzen 31 für eine nicht näher dargestellte Schlauchleitung ansetzbar, insbesondere verrastbar ist. Über dieses Anschlußstück 30 kann den beiden Förderkanälen Waschflüssigkeit zugeführt werden. Dieses Anschlußstück 30 kann bei einer in der Zeichnung nicht näher dargestellten Ausführung zwei Schlauchstutzen aufweisen, so daß eine Aufteilung der Waschflüssigkeit beispielsweise über Magnetventile steuerbar wäre, die mit der Pumpe zu einer Baueinheit vereinigt sein könnten.

Bei der vorliegenden Erfindung ist jedoch in dieses Anschlußstück 30 eine steuerbare Weiche integriert, über die die Waschflüssigkeit auf einen der beiden Kanäle 23a,b verteilt wird. Diese Weiche wird durch eine Relativbewegung zwischen dem Rohrstück 21 und dem Anschlußstück 30 gesteuert, das über seitlich abstehende Auslegerarme 32 an einem nicht näher dargestellten Rahmen ortsfest festgelegt ist.

Anhand von Fig. 3 soll im folgenden die Funktion dieser Weiche näher erläutert werden. Aus dieser Zeichnung erkennt man, daß die Bohrung im Anschlußstutzen 31 in einen Ringkanal 35 mündet, dessen Innenwand 36 zwei im Winkel zueinander versetzt angeordnete Durchbrüche 37a,b aufweist, die in das Zentrum 38 münden. Von diesem Zentrum 38 geht das Rohrstück 21 aus und der Trennsteg 25 ragt in dieses Zentrum hinein. Dabei ist zwischen dem Rohrstück 21 und der Innenwand 36 des Ringkanals 35 ein drehbares Absperrorgan 40 mit zwei Öffnungen 41a,b vorgesehen, das relativ zum Ringkanal 35 in zwei Schaltstellungen umstellbar ist. Dabei liegt in der einen Schaltstellung die Öffnung 41a gewissermaßen deckungsgleich auf dem Durchbruch 37a, so daß Waschflüssigkeit aus dem Ringkanl 35 in das Zentrum 38 und dann in den Kanal 23a einströmen kann. Diese Stellung ist in Fig. 3 dargestellt. Der Steg 25 liegt dabei an dem Anschlag 42a im Absperrorgan 40 an. Dreht sich nun ausgehend von der in Fig. 3 gezeigten Stellung das Führungsgehäuse und damit auch das Rohrstück 21 mit dem Steg 25 entgegen dem Uhrzeigersinn, so ändert sich zunächst an der Relativstellung zwischen dem Durchbruch 37a und der Öffnung 41a nichts, so daß weiterhin Waschflüssigkeit in den Kanal 23a strömt. Schließlich schlägt aber der Steg 25 an dem anderen Anschlag 42b am Absperrorgan 40 an und verstellt dieses Absperrorgan dann entgegen dem Uhrzeigersinn. Damit wird durch das Absperrorgan der Durchbruch 37a abgesperrt, dafür aber auf der genenüberliegenden Seite die Öffnung 41b auf den Durchbruch 37b hin ausgerichtet, so daß schließlich Waschflüssigkeit in den Förderkanal 23b einströmen kann. Aus Fig. 3 wird also erkennbar, daß in einer ersten Schaltstellung des Absperrorganes nur ein erster Durchbruch 37a des Ringkanals 35 und eine erste Öffnung 41a im Absperrorgan 40 zusammenwirken und einen Durchgang der Waschflüssigkeit zu einem Förderkanal erlauben, während der andere Förderkanal abgesperrt ist. In der anderen Schaltstellung wirken dagegen der Durchbruch 37b und die Öffnung 41b zusammen und ermöglichen den Zutritt der Waschflüssigkeit zum anderen Förderkanal 23b. Diese das Waschwasser verteilende Weiche ist dabei so ausgebildet, daß das Absperrorgan 40 jeweils kurz vor dem Ende eines halben Wischzyklus durch die Bewegung des Rohrstückes bzw. des damit drehfest verbundenen Steges 25 umgestellt wird, wobei dieser Steg dabei wechselweise an einem von zwei winkelmäßig zueinander versetzten Anschlägen 42a,b am Absperrorgan 40 anschlägt. Während des größten Teils des Wischzyklus wird das Absperrorgan nicht verstellt, so daß während des eigentlichen Waschvorganges keine Querschnittsveränderung im Waschflüssigkeitssystem auftritt. Erst kurz vor dem Ende eines jeden halben Wischzyklus werden die bis dahin deckungsgleich liegenden Durchbrüche und Öffnungen so verstellt, daß der Waschflüssigkeitzutritt abgesperrt ist, während zugleich auf der gegenüberliegenden Seite andere Durchbrüche und Öffnungen deckungsgleich verstellt werden.

Wesentlich für eine einwandfreie Funktion dieser Scheiberwaschanlage ist eine gute Abdichtung und Trennung zwischen den beiden Förderkanälen. Um dies zu gewährleisten, soll der Steg 25 dichtend an der Bodenfläche 45 des Anschlußstückes 30 anliegen. Um nun hier eine gute Abdichtung zu erreichen, soll diese Bodenfläche 45 elastisch in Richtung auf diesen Steg 25 vorgespannt sein. Dies wird u.a. durch die Auslegerarme 32 gewährleistet, die elastisch auslenkbar und in Richtung auf das Rohrstück 21 hin federnd vorgespannt sind. Bei dieser Gelegenheit wird darauf hingewiesen, daß bei der in der Zeichnung dargestellten Ausführung das Absperrorgan 40 als im wesentlichen zylindrisches Teil ohne Boden ausgebildet ist und daher der Steg 25 unmittelbar an der Bodenfläche 45 des Anschlußstückes 30 anliegt. Natürlich wäre auch eine Ausführung denkbar, bei der dieses Absperrorgan 40 einen Boden hat, so daß dann der Steg 25 natürlich an diesem Boden des Absperrorganes und nicht an der Bodenfläche des Anschlußstückes anliegt.

Das Anschlußstück 30 wird also insgesamt entgegen der Pfeilrichtung P1 vorgespannt und übt damit eine gewisse Kraft auf das Rohrstück aus. Eine Verschiebung des Rohrstückes 21 wird aber dadurch verhindert, daß die gesamte Baueinheit aus Rohrstück 21 und den beiden V-förmig abstehenden Leitungsabschnitten 22a,b mit der Grundplatte über eine Schraube 46 verschraubt sind. Diese Schraubverbindung sollte aus Stabilitätsgründen nahe dem Rohrstück vorgesehen werden. Natürlich sind auch Ausführungen denkbar, bei denen diese Baueinheit durch Anschläge am Deckel 13 in Achsrichtung lagerichtig fixiert wird.

Wichtig für eine einwandreie Funktion der Waschanlage ist auch eine Heizung mit einer Heizwicklung 50, die in einem den Ringkanal 35 umgebenden Kanal 51 angeordnet ist. Auch in der Bodenfläche 45 des Anschlußstückes 30 könnte man eine Heizwicklung vorsehen, denn es ist besonders wichtig, daß die Drehbeweglichkeit des Abseperrorganes auch bei tiefen Temperaturen gewährleistet ist. Natürlich könnte man weitere Heizwicklungen auch in die Förderkanäle bis an die Düsen führen und auch vom Schlauchanschlußstutzen 31 aus bis zur Pumpe die Waschflüssigkeitsleitung erwärmen.

Das Anschlußstück 30 wird vorzugsweise als Spritzgußteil aus Kunststoff hergestellt, wobei dann die einzelnen Kanäle durch einen Deckel 52 abgedeckt werden, der mit dem eigentlichen Anschlußstück 30 mittels Ultraschall verschweißt wird.

Aus Fig. 2 geht hervor, daß die beiden Leitungsabschnitte 22a,b im Bereich der Trennlinie zwischen der Grundplatte 12 und dem Deckel 13 aus dem Führungsgehäuse 11 herausragen, wobei dort ein Dichtring 53 vorgesehen ist. Eine solche Anordnung ist vorteilhalft, weil dann in den Deckel 13 keine Durchbrüche eingearbeitet werden müssen und weil außerdem eine Montage der Baueinheit aus diesen Leitungsabschnitten und dem Rohrstück von der Seite der Grundplatte her möglich ist.

Es wird schließlich noch darauf hingewiesen, daß die beiden Leitungsabschnitte 22a,b in entsprechenden Aussparungen der Grundplatte 12 angeordnet sind, damit die Bauhöhe gegenüber den bekannten Ausführungen nicht vergrößert wird, wodurch evtl. die Bewegbarkeit des Kurbelgetriebes 18 beschränkt wäre.

**Patentansprüche**

1. Scheibenreinigungsanlage, insbesondere für Kraftfahrzeuge, mit einer Welle (15) für einen Wischhebel, die eine durchgehende axiale Bohrung (20) für eine Waschflüssigkeitsleitung aufweist, durch die Waschflüssigkeit zu wenigstens zwei mit dem Wischhebel während des Wischvorganges pendelnden Düsen gefördert wird, dadurch gekennzeichnet, daß in die Bohrung (20) der Welle (15) ein Rohrstück (21) eingesetzt ist und daß dieses Rohrstück (21) durch einen axial verlaufenden Trennsteg (25) in zwei Förderkanäle (23a, b) der Flüssigkeitsleitung aufgeteilt ist.

2. Scheibenreinigungsanlage nach Anspruch 1, dadurch gekennzeichnet, daß die Anzahl der Förderkanäle der Anzahl der Düsen entspricht.

3. Scheibenreinigungsanlage nach Anspruch 2, dadurch gekennzeichnet, daß die Waschflüssigkeitsleitung in zwei Förderkanäle (23a, b) mit wenigstens annähernd gleichem Querschnitt unterteilt ist.

4. Scheibenreinigungsanlage nach Anspruch 3, dadurch gekennzeichnet, daß der Trennsteg (25) in dem Rohrstück (21) diametral angeordnet ist.

5. Scheibenreinigungsanlage nach Anspruch 4, dadurch gekennzeichnet, daß von der einen Stirnseite des Rohrstückes (21) V-förmig zwei Leitungsabschnitte (22a,b) zu den Düsen ausgehen.

6. Scheibenreinigungsanlage nach Anspruch 5, dadurch gekennzeichnet, daß die Leitungsabschnitte (22a,b) und das Rohrstück (21) einschließlich des Trennsteges (25) vorzugsweise einstückig aus Kunststoff hergestellt sind.

7. Scheibenreinigungsanlage nach Anspruch 4, dadurch gekennzeichnet, daß an der anderen Seite des Rohrstückes (21) ein Anschlußstück (30) mit einem Stutzen (31) für eine Schlauchleitung ansetzbar, insbesondere verrastbar ist.

8. Scheibenreinigungsanlage nach Anspruch 7, dadurch gekennzeichnet, daß in dieses Anschlußstück (30) eine steuerbare Weiche zur Verteilung der Waschflüssigkeit auf einen der beiden Förderkanäle (23a,b) integriert ist.

9. Scheibenreinigungsanlage nach Anspruch 8, dadurch gekennzeichnet, daß die Weiche durch eine Relativbewegung zwischen dem Rohrstück (21) und dem Anschlußstück (30) gesteuert wird.

10. Scheibenreinigungsanlage nach Anspruch 9, dadurch gekennzeichnet, daß die Bohrung des Schlauchstutzens (31) in einen Ringkanal (35) mündet, dessen Innenwand (36) wenigstens zwei im Winkel zueinander versetzt in das Zentrum (37) mündende Durchbrüche (37a,b) aufweist und daß über diese Durchbrüche (37a,b) wechselweise Waschflüssigkeit in einen der Förderkanäle (23a,b) fließt.

11. Scheibenreinigungsanlage nach Anspruch 10, dadurch gekennzeichnet, daß zwischen dem Rohrstück (21) und der Innenwand (36) des Ringkanals (35) ein drehbares Absperrorgan (40) mit Öffnungen (41a,b) in der Wandung angeordnet ist, das relativ zum Ringkanal (35) in wenigstens zwei Schaltstellungen umstellbar ist, wobei in der einen Schaltstellung nur ein erster Durchbruch (37a) des Ringkanals (35) und eine erste Öffnung (41a) des Absperrorgans (40) zusammenwirken und einen Durchgang der Waschflüssigkeit in den einen Förderkanal (23a) ermöglichen, während in der anderen Schaltstellung nur ein zweiter Durchbruch (37b) mit einer zweiten Öffnung (41b) zusammenwirkt und einen Durchgang der Waschflüssigkeit in den anderen Förderkanal (23b) ermöglicht.

12. Scheibenreinigungsanlage nach Anspruch 11, dadurch gekennzeichnet, daß das Absperrorgan (40) jeweils kurz vor dem Ende eines halben Wischzyklus durch die Bewegung des Rohrstückes (21) umstellbar ist, wobei der diametrale Steg (25) am Rohrstück (21) wechselweise an einen von zwei winkelmäßig zueinander versetzten Anschlägen (42a,b) am Absperrorgan (40) anschlägt.

13. Scheibenreinigungs nach wenigstens einem der vorhergehenden Ansprüche, dadurch gekennzeichnet, daß der Steg (25) dichtend an der Bodenfläche (45) des Anschlußstückes (30) oder an einer Bodenfläche des Absperrorgans anliegt und diese Bodenfläche elastisch in Richtung auf den Steg (25) vorgespannt ist.

14. Scheibenreinigungsanlage nach wenigsten seinem der vorhergehenden Ansprüche, dadurch gekennzeichnet, daß der Ringkanal (35) von einem eine Heizwicklung (50) festlegenden Kanal (51) umgeben ist.

15. Scheibenreinigungsanlage nach wenigstens einem der vorhergehenden Ansprüche, dadurch gekennzeichnet, daß auch in dem dem Rohrstück (21) axial gegenüberliegenden Boden (45) des Anschlußstückes (30) eine Heizwicklung angeordnet ist.

16. Scheibenreinigungsanlage nach wenigstens einem der vorhergehenden Ansprüche, dadurch gekennzeichnet, daß die einzelnen Kanäle (35,51) des Anschlußstückes (30) durch einen gemeinsamen Deckel (52) abgedeckt sind.

17. Scheibenreinigungsanlage nach wenigstens einem der vorhergehenden Ansprüche, dadurch gekennzeichnet, daß die Welle (15) zum Antrieb eines Führungsgehäuses (11) dient, in dem ein Kolben (10) linear verstellbar angeordnet ist, an dessen einem Endabschnitt der Wischhebel befestigbar ist, der während einer Pendelbewegung des Führungsgehäuses radial verschoben wird.

18. Scheibenreinigungsanlage nach Anspruch 17, dadurch gekennzeichnet, daß eine Grundplatte (12) des Führungsgehäuses (11) drehfest mit der Welle (15) verbunden ist und daß das Rohrstück (21) mit den zwei V-förmig abgehenden Leitungsabschnitten (22a,b) von der Seite der Grundplatte (11) her in die Bohrung (20) der Welle (15) eingesetzt ist.

19. Scheibenreinigungsanlage nach Anspruch 18, dadurch gekennzeichnet, daß die Baueinheit aus Rohrstück (21) und den beiden Leitungsabschnitten (22a,b) nahe dem Rohrstück (21) mit der Grundplatte (12) verschraubt oder durch einen mit der Grundplatte (12) verbundenen Deckel (13) lagerichtig fixiert ist.

20. Scheibenreinigungsanlage nach wenigstens einem der vorhergehenden Ansprüche, dadurch gekennzeichnet, daß die beiden Leitungsabschnitte (22a,b) seitlich neben dem Kolben (10) aus dem Führungsgehäuse, vorzugsweise im Bereich der Trennstelle zwischen Grundplatte (12) und Deckel (13) herausragen.

21. Scheibenreinigungsanlage nach wenigstens einem der vorhergehenden Ansprüche, dadurch gekennzeichnet, daß die Welle (15) in einer Lagerbuchse (17) drehbar gelagert ist, die an einem Rahmen fixiert ist, und daß das Anschlußstück (30) über zwei seitlich abstehende Auslegerarme (32) ebenfalls an diesem Rahmen vorzugsweise derart fixiert ist, daß es in Richtung auf das Rohrstück (21) federnd vorgespannt ist.

22. Scheibenreinigungsanlage nach wenigstens einem der vorhergehenden Ansprüche, dadurch gekennzeichnet, daß die Leitungsabschnitte (22a,b) in Aufnahmen der Grundplatte (12) versenkt angeordnet sind.

## Revendications

1. Dispositif de lave-glace, en particulier pour des véhicules automobiles, comprenant un arbre (15) destiné à un levier de balayage et qui comporte un perçage axial débouchant (20) pour une conduite de liquide de lavage, par l'intermédiaire de laquelle du liquide de lavage est envoyé à au moins deux buses qui oscillent avec le levier de balayage lors de l'opération de balayage, caractérisé en ce qu'un tuyau (21) est disposé dans le perçage (20) de l'arbre (15), et en ce que ledit tuyau (21) est divisé par une entretoise axiale (25) en deux canaux d'alimentation (23a, b) de la conduite de liquide.

2. Dispositif de lave-glace conforme à la revendication 1, caractérisé en ce que le nombre des canaux d'alimentation correspond au nombre des buses.

3. Dispositif de lave-glace conforme à la revendication 2, caractérisé en ce que la conduite de liquide de lavage est divisée en deux canaux d'alimentation (23a, b) de section transversale au moins sensiblement identique.

4. Dispositif de lave-glace conforme à la revendication 3, caractérisé en ce que l'entretoise (25) est disposée diamétralement dans le tuyau (21).

5. Dispositif de lave-glace conforme à la revendication 4, caractérisé en ce que, de l'un des côtés avant du tuyau (21) partent, en forme de V, deux portions de conduite (22a, b) qui s'étendent jusqu'aux buses.

6. Dispositif de lave-glace conforme à la revendication 5, caractérisé en ce que les portions de conduite (22a, b) et le tuyau (21), entretoise (25) comprise, sont réalisés de préférence d'une seule pièce.

7. Dispositif de lave-glace conforme à la revendication 4, caractérisé en ce que, de l'autre côté du tuyau (21), peut être monté, en particulier par encliquetage, un élément de raccordement (30) comportant un embout (31) destiné à un flexible.

8. Dispositif de lave-glace conforme à la revendication 7, caractérisé en ce que, dans ledit élément de raccordement (30) est intégré un aiguillage manœuvrable pour envoyer le liquide de lavage à l'un des deux canaux d'alimentation (23a, b).

9. Dispositif de lave-glace conforme à la revendication 8, caractérisé en ce que l'aiguillage est commandé par un déplacement relatif entre le tuyau (21) et l'élément de raccordement (30).

10. Dispositif de lave-glace conforme à la revendication 9, caractérisé en ce que le perçage de l'embout pour flexible (31) débouche dans un canal annulaire (35) dont la paroi intérieure (36) comporte au moins deux découpes (37a, b) débouchant de manière décalée angulairement dans le centre (37), et en ce que du liquide de lavage s'écoule sélectivement dans l'un des canaux d'alimentation (23a, b) par l'intermédiaire desdites découpes (37a, b).

11. Dispositif de lave-glace conforme à la revendication 10, caractérisé en ce que, entre le tuyau (21) et la paroi intérieure (36) du canal annulaire (35), est disposé un organe de fermeture rotatif (40) dont la paroi est munie d'ouvertures (41a, b) et qui peut être amené dans au moins deux positions de commutation par rapport au canal annulaire (35), dans l'une des positions de commutation, seule la première découpe (37a) du canal annulaire (35) et une première ouverture (41a) de l'organe de fermeture (40) coopérant et permettant le passage du liquide de lavage dans l'un des canaux d'alimentation (23a), tandis que, dans l'autre position de commutation, seule une seconde découpe (37b) coopère avec une seconde ouverture (41b) et permet le passage du liquide de lavage dans l'autre canal d'alimentation (23b).

12. Dispositif de lave-glace conforme à la revendication 11, caractérisé en ce que l'organe de fermeture (40) peut être commuté juste avant la fin d'un demi-cycle de balayage par le déplacement du tuyau (21), l'entretoise diamétrale (25) du tuyau (21) étant alternativement appliquée contre l'une de deux butées décalées angulairement (42a, b) de l'organe de fermeture (40).

13. Dispositif de lave-glace conforme au moins à l'une quelconque des revendications précédentes, caractérisé en ce que l'entretoise (25) est appliquée de manière étanche contre le fond (45) de l'élément de raccordement (30) ou contre un fond de l'organe de fermeture, et en ce que ledit fond est précontraint élastiquement en direction de l'entretoise (25).

14. Dispositif de lave-glace conforme au moins à l'une quelconque des revendications précédentes, caractérisé en ce que le canal annulaire (35) est entouré par un canal (51) abritant un enroulement chauffant (50).

15. Dispositif de lave-glace conforme au moins à l'une quelconque des revendications précédentes, caractérisé en ce qu'un enroulement chauffant est également disposé dans le fond (45) de l'élément de raccordement (30) opposé axialement au tuyau (21).

16. Dispositif de lave-glace conforme au moins à l'une quelconque des revendications précédentes, caractérisé en ce que les différents canaux (35, 51) de l'élément de raccordement (30) sont recouverts par un couvercle commun (52).

17. Dispositif de lave-glace conforme au moins à l'une quelconque des revendications précédentes, caractérisé en ce que l'arbre (15) sert à entraîner un boîtier de guidage (11) dans lequel est disposé, de manière à coulisser linéairement, un piston (10) à l'une des parties extrêmes duquel peut être fixé le levier de balayage qui est déplacé radialement lors d'un déplacement alternatif du boîtier de guidage.

18. Dispositif de lave-glace conforme à la revendication 17, caractérisé en ce qu'un socle (12) du boîtier de guidage (11) est lié en rotation avec l'arbre (15), et en ce que les deux portions de conduite (22a, b), qui partent en forme de V, du tuyau (21), sont montées dans le perçage (20) de l'arbre par le côté du socle (11).

19. Dispositif de lave-glace conforme à la revendication 18, caractérisé en ce que l'unité structurelle constituée du tuyau (21) et des deux portions de conduite (22a, b) est vissée avec le socle (12) à proximité du tuyau (21) ou est immobilisée en bonne position par un couvercle (13) relié au socle (12).

20. Dispositif de lave-glace conforme au moins à l'une quelconque des revendications précédentes, caractérisé en ce que les deux portions de conduite (22a, b) dépassent latéralement à côté du piston (10) hors du boîtier de guidage, de préférence dans la zone du point de séparation entre le socle (12) et le couvercle (13).

21. Dispositif de lave-glace conforme au moins à l'une quelconque des revendications précédentes, caractérisé en ce que l'arbre (15) est monté en rotation dans un coussinet de palier (17) fixé à un bâti, et en ce que l'élément de raccordement (30) est lui aussi immobilisé contre ledit bâti par l'intermédiaire de deux bras déployés latéralement (32), de préférence de façon à être précontraint élastiquement en direction du tuyau (21).

22. Dispositif de lave-glace conforme au moins à l'une quelconque des revendications précédentes, caractérisé en ce que les portions de conduite (22a, b) sont encastrées dans des logements du socle (12).

**Claims**

1. A windshield cleaning system, especially for motor vehicles, comprising a shaft (15) for a wiper arm-and-blade assembly, which shaft has a continuous axial bore (20) for a washing liquid line, through which washing liquid is fed to at least two jets participating in the movements of the wiper arm-and-blade assembly during wiper operation, characterized in that a pipe (21) is inserted into the bore (20) of the shaft (15) and that this pipe (21) is divided into two supply channels (23a, b) of the liquid line by a parting web (25) that is axially running.

2. A windshield cleaning system according to claim 1, characterized in that the number of the supply channels corresponds to the number of the jets.

3. A windshield cleaning system according to claim 2, characterized in that the washing liquid line is divided into two supply channels (23a, b) of at least approximately the saw cross-section.

4. A windshield cleaning system according to claim 3, characterized in that the parting web (25) in the pipe (21) is diametrically arranged.

5. A windshield cleaning system according to claim 4, characterized in that from the one front face of the pipe (21) two pipe branches (22a, b) lead to the jets.

6. A windshield cleaning system according to claim 5, characterized in that the pipe branches (22a, b) and the pipe including the parting web (25) are preferably integrally made of plastics.

7. A windshield cleaning system according to claim 4, characterized in that on the other side of the pipe (21) a connecting part (30) with a fitting (31) for a hose pipe can be joined, especially that it can be latched.

8. A windshield cleaning system according to claim 7, characterized in that a controllable switch for distributing the washing liquid to one of the two supply channels (23a, b) is integrated into this connecting part (30).

9. A windshield cleaning system according to claim 8, characterized in that the switch is controlled via a relative motion between the pipe (21) and the connecting part (30).

10. A windshield cleaning system according to claim 9, characterized in that the bore of the hose fitting (31) ends in a ring channel (35), the inner wall (36) of which comprises at least two apertures (37a, b) ending in the centre (37) and displaced at an angle to each other and that washing liquid flows in turns into one of the supply channels (23a, b) via these apertures (37a, b).

11. A windshield cleaning system according to claim 10, characterized in that a rotatable closing element (40) with openings (41a, b) in the wall is arranged between the pipe (21) and the inner wall (36) of the ring channel (35), which closing element (40) can be switched over in at least two switching positions in relation to the ring channel (35), whereby in the one switching position only a first aperture (37a) of the ring channel (35) and a first opening (41a) of the closing element (40) cooperate and enable the washing liquid to flow into the one supply channel (23a), whereas in the other switching position only a second aperture (37b) cooperates with a second opening (41b) and enables the washing liquid to flow into the other supply channel (23b).

12. A windshield cleaning system according to claim 11, characterized in that the closing element (40) can be switched over by the motion of the pipe (21) shortly before the end of half a wiping cycle each, whereby the diametrical web (25) of the pipe (21) is pushed in turns against one of the two stops (42a, b) of the closing element (40), which stops are displaced at an angle to each other.

13. A windshield cleaning system according to at least one of the preceding claims, characterized in that the web (25) sealingly lies on the bottom (45) of the connecting part (30) or on the bottom of the closing element and that this bottom is elastically tensioned in the direction of the web (25).

14. A windshield cleaning system according to at least one of the preceding claims, characterized in that the ring channel (35) is surrounded by a channel (51) holding a filament winding (50).

15. A windshield cleaning system according to at least one of the preceding claims, characterized in that a filament winding is also arranged in the bottom of the connecting part (30) axially opposite the pipe (21).

16. A windshield cleaning system according to at least one of the preceding claims, characterized in that the different channels (35, 51) of the connecting part (30) are covered by a joint cover (52).

17. A windshield cleaning system according to at least one of the preceding claims, characterized in that the shaft (15) serves for driving a guide housing (11), in which a piston is movably arranged in linear direction, onto the end of which the wiper arm-and-blade assembly radially moved during pendulum-motion of the guide housing can be fixed.

18. A windshield cleaning system according to claim 17, characterized in that a base plate (12) of the guide housing (11) is unrotatably connected with the shaft (15) and that the pipe (21) with the two pipe branches (22a, b) extending in the shape of a V is inserted into the bore (20) of the shaft (15) from the side of the base plate (11).

19. A windshield cleaning system according to claim 18, characterized in that the unit of the pipe (21) and the two pipe branches (22a, b) are screwed with the base plate (12) near the pipe (21) or that it is fixed in the right position by means of a cover (13) connected with the base plate (12).

20. A windshield cleaning system according to at least one of the preceding claims, characterized in that the two pipe branches (22a, b) extend the guide housing beside the piston (10), preferably in the section of the parting point between base plate (12) and the cover (13).

21. A windshield cleaning system according to at least one of the preceding claims, characterized in that the shaft (15) is rotatably mounted in a bearing bush (17), which is fixed to a frame, and that the connecting part (30) is also fixed to this frame via two projecting arms (32) extending at the sides preferably in such a way that it is springily tensioned in the direction of the pipe (21).

22. A windshield cleaning system according to at least one of the preceding claims, characterized in that the pipe branches (22a, b) are arranged in the locations of the base plate (12) in a depressed position.

Fig.1

EP 0 272 480 B1

Fig. 2

Fig. 4

Fig. 3